# EUROPÄISCHE PATENTANMELDUNG

(11) **EP 2 799 675 A1**
(43) Veröffentlichungstag der Anmeldung: **05.11.2014**
(21) Anmeldenummer: 14162747.1
(22) Anmeldetag: 31.03.2014
(51) Int. Cl.: F01M 13/04

(54) **Be- und Entlüftungsvorrichtung**

(30) Priorität: 30.04.2013 DE 102013207970
(71) Anmelder: ZF Friedrichshafen AG, 88038 Friedrichshafen (DE)
(72) Erfinder: Alesch, Klaus, 94107 Untergriesbach (DE); Lenz, Paul, 94065 Waldkirchen (DE)

(57) **Zusammenfassung**

Die Erfindung bezieht sich auf eine Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht. Mit einem in der Leitung angeordneten Filtergehäuse (1), das von einer gasdurchlässigen und flüssigkeitsundurchlässigen Filtermembran (21) unterteilt ist, wobei ein erster Teil der Leitung von dem Behälter zu der einen Seite der Filtermembran (21) und ein zweiter Teil der Leitung von der zweiten Seite der Filtermembran (21) zur Umgebung führt. Auf einer oder zu beiden Seiten der Filtermembran (21) ist eine eine Auslenkung der Filtermembran (21) quer zu ihrer Ebene begrenzende Stützeinrichtung angeordnet.

## Beschreibung

Die Erfindung bezieht sich auf eine Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht, mit einem in der Leitung angeordneten Filtergehäuse, das von einer gasdurchlässigen und flüssigkeitsundurchlässigen Filtermembran unterteilt ist, wobei ein erster Teil der Leitung von dem Behälter zu der einen Seite der Filtermembran und ein zweiter Teil der Leitung von der zweiten Seite der Filtermembran zur Umgebung führt.

Derartige Be- und Entlüftungsvorrichtungen dienen dazu Behälter wie z.B. Achsgehäuse in Kraftfahrzeugen zu be- und entlüften. Dazu ist es bekannt die Be- und Entlüftungsvorrichtung über eine Schlauchleitung mit dem zu entlüftenden Achsgehäuse zu verbinden, so dass die mit Ölpartikeln angereicherte Luft durch die Schlauchleitung zu einer gaspermeablen Filtermembran im Filtergehäuse geleitet wird. Dabei lässt die Filtermembran die Luft hindurch, weist aber das in der Luft enthaltende Öl ab, so dass dieses Öl über die Schlauchleitung wieder in das Achsgehäuse zurückfließt. Die durch die Filtermembran hindurchgetretene Luft gelangt über eine weitere Schlauchleitung nach außen in die Umgebung. Reduziert sich das Volumen des im Achsgehäuse enthaltenen und durch den Fahrbetrieb des Kraftfahrzeugs erwärmten Öls nach Beendigung des Fahrbetriebs wieder, so wird ein Unterdruck im Achsgehäuse dadurch vermieden, dass Luft von außen über die weitere Leitung in das Achsgehäuse gelangen kann. Feuchtigkeit oder Wasser sowie Schmutz, die dabei mit angesaugt werden können, werden durch die Filtermembran an einem Eindringen in das Achsgehäuse gehindert.

Aufgabe der Erfindung ist es daher eine Be- und Entlüftungsvorrichtung der eingangs genannten Art zu schaffen, die ein weitgehend störungsfreies Belüften und Entlüften des Behälters gewährleistet.

Diese Aufgabe wird erfindungsgemäß dadurch gelöst, dass auf einer oder zu beiden Seiten der Filtermembran eine eine Auslenkung der Filtermembran quer zu ihrer Ebene begrenzende Stützeinrichtung angeordnet ist.

Durch die Stützeinrichtung, die zumindest annähernd in Anlage an der Filtermembran ist, wird eine Verformung der Filtermembran aufgrund ihrer Druck- bzw. Unterdruckbeaufschlagung begrenzt. Damit kommt es zu keiner oder zu keiner wesentlichen plastischen Verformung und die Filtermembran vergrößert ihre Membranfläche nur bis zur Anlage an der Stützeinrichtung. Eine Beschädigung der Filtermembran wird damit vermieden und ein weitgehend störungsfreies Belüften und Entlüften des Behälters gewährleistet.

Der Behälter kann z.B. ein Achsgehäuse oder ein Getriebegehäuse sein.

Um möglichst wenig der Membranfläche der Filtermembran durch die Stützeinrichtung abzudecken und somit die Membranfläche möglichst weitgehend einem Be- und Entlüften zur Verfügung zu stellen, können die Stützeinrichtungen Drahtgitter sein.

Bei einem Verschleiß der Filtermembran kann auf einfache Weise deren Austausch dadurch erfolgen, dass die Filtermembran einen Filtereinsatz bildend an einem in den Innenraum des Filtergehäuses lösbar einsetzbaren Rahmen angeordnet ist, dessen Querschnitt dem Querschnitt des Innenraums des Filtergehäuses entspricht.

Vorzugsweise sind dabei auch die Stützeinrichtungen an dem Rahmen angeordnet.

Eine einfache Montage der Filtereinheit wird dadurch erreicht, dass der Innenraum des Filtergehäuses und des Rahmens einen runden Querschnitt aufweisen, wobei an der äußeren radial umlaufenden Mantelfläche des Rahmens eine radial umlaufende Nut ausgebildet ist, in die ein Dichtring eingesetzt ist.

Dadurch ist keine spezielle Drehposition der komplett austauschbaren Filtereinheit erforderlich und die beiden Seiten des Filtergehäuses werden durch die Filtereinheit sicher voneinander getrennt.

Zu einem leichten Austausch der Filtereinheit kann der Rahmen ein axial hervorstehendes Griffteil aufweisen, das vorzugsweise koaxial von der Filtereinheit hervorsteht.

Zur leichten Öffenbarkeit des Filtergehäuses bei einem Austausch der Filtereinheit kann das Filtergehäuse aus zwei topfartigen Gehäuseteilen bestehen, die, ihre Topföffnungen einander zugewandt, miteinander verbindbar sind.

Dazu kann die Außenkontur des einen Gehäuseteils der Innenkontur des anderen Gehäuseteils entsprechen und das erste Gehäuseteil in den Innenraum des zweiten Gehäuseteils einschiebbar und die beiden Gehäuseteile miteinander verbindbar sein.

Ist dabei die Filtereinheit mit seinem Rahmen zwischen den Böden der beiden Gehäuseteile eingespannt, sind keine Halteelemente für die Filtereinheit erforderlich, wodurch sich ein einfacher Aufbau der Be- und Entlüftungsvorrichtung ergibt.

Zu einer Reduzierung an Bauteilen und damit einer Vereinfachung der Lagerhaltung führt es, wenn die beiden Gehäuseteile mittels einer oder mehrerer Rasteinrichtungen miteinander verbindbar sind.

Ist das Filtergehäuse mit annähernd senkrechter Ebene der Filtermembran an dem Kraftfahrzeug anordenbar und münden der erste Teil und/oder der zweite Teil der Leitung in den unteren Bereich des Filtergehäuses, so können Öl und feuchte Verschmutzungen von der Filtermembran nach unten abtropfen und über die jeweilige Leitung ablaufen. Ein Zusetzen der Filtermembran und damit deren frühzeitiger Austauschbedarf werden vermieden.

Ein einfache Montage der Be- und Entlüftungsvorrichtung wird dadurch ermöglicht, dass das Filtergehäuse einen ersten Anschlussstutzen zum Anschließen eines zum Behälter führenden ersten Schlauchs und/oder einen zweiten Anschlussstutzen zum Anschließen eines in die Umwelt mündenden zweiten Schlauchs aufweist.

Damit können auch bei schwieriger Einbauumgebung der Be- und Entlüftungsvorrichtung zunächst das Filtergehäuse und anschließend die Schläuche leicht montiert werden.

Weist zumindest eines der Gehäuseteile einen oder mehrere über seine radial umlaufende äußere Mantelfläche radial flanschartig hervorstehende Ansätze auf, so sind die beiden Gehäuseteile bei einer Demontage leicht und sicher erfassbar. Außerdem bilden die Ansätze auch Ablaufführungen für von außen das Filtergehäuse beaufschlagendes Wasser.

Am unteren Bereich der Ansätze können diese in einen nach unten gerichteten Kragen übergehen, der als definierte Abtropfrinne wirkt.

Der mit der Umgebung verbundene Teil des Innenraums des Filtergehäuses kann über einen Notentlüftungskanal mit der Umgebung verbunden sein, der am oberen Bereich des Filtergehäuses in die Umgebung mündet.

Dadurch wird vermieden, dass bei Verschluss des in die Umgebung mündenden Endes des zweiten Teils der Leitung durch Wasser oder Schmutz eine Belüftung des Behälters verhindert wird.

Verringert sich z.B. durch Temperaturverringerung des Öls im Behälter dessen Volumen, so entsteht bei Verschluss der Be- und Entlüftungsvorrichtung ein Unterdruck im Behälter. Im Falle eines Achsgehäuses als Gehäuse führt dies dazu, dass über die dort vorhandenen Wellendichtringe Feuchtigkeit und Wasser in der Größenordnung von mehreren Litern in das Achsgehäuse eingesaugt werden kann, das dann zu Schäden im Achsgehäuse führen kann. Dies wird durch die Belüftung über den Notentlüftungskanal vermieden.

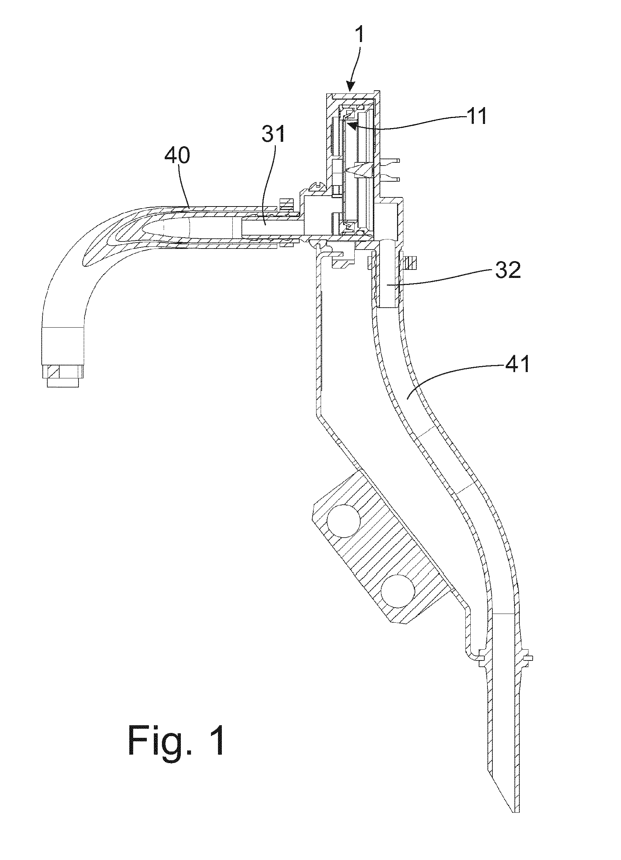

Ein Ausführungsbeispiel der Erfindung ist in der Zeichnung dargestellt und wird im Folgenden näher beschrieben. Es zeigt
- Figur 1: eine Seitenansicht einer Be- und Entlüftungsvorrichtung mit Anschlüssen im Querschnitt

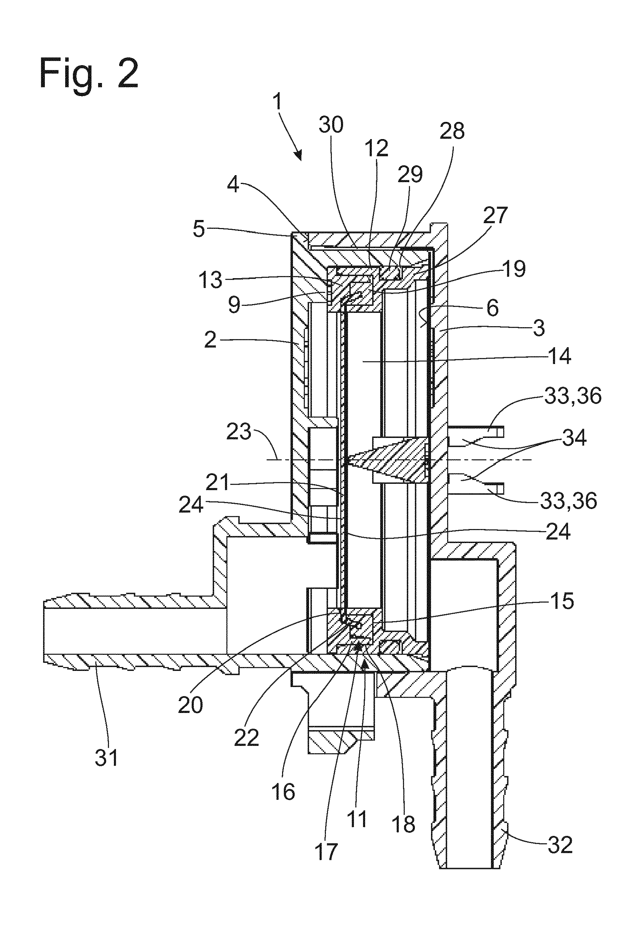

- Figur 2: eine vergrößerte Darstellung der Be- und Entlüftungsvorrichtung nach Figur 1

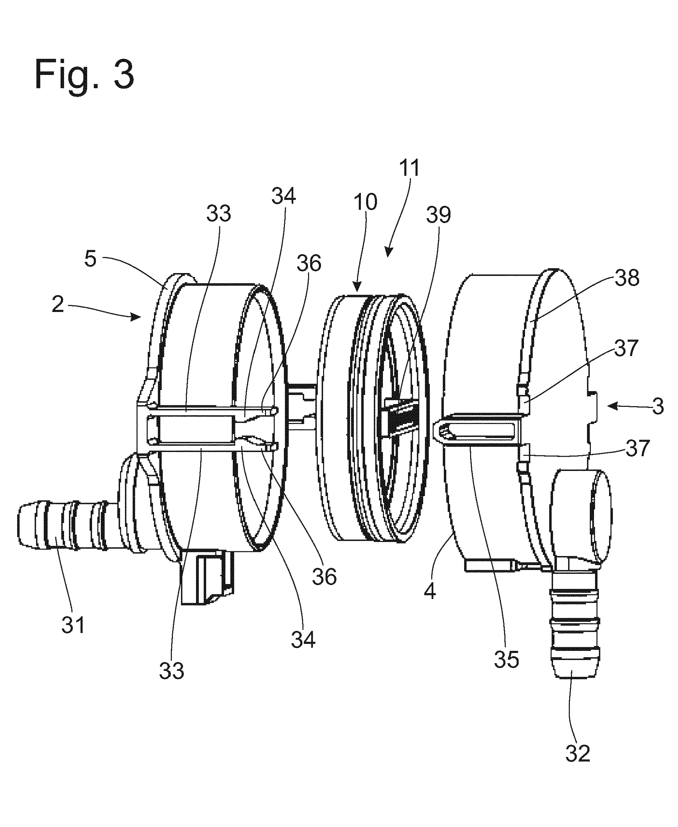

- Figur 3: eine Explosionsdarstellung der Be- und Entlüftungsvorrichtung nach Figur 1

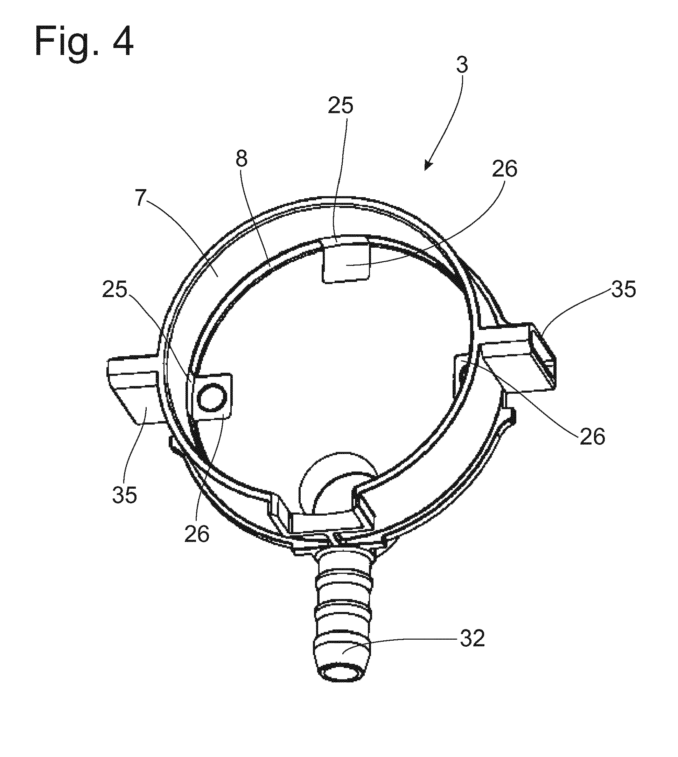

- Figur 4: eine perspektivische Darstellung des zweiten Gehäuseteils der Be- und Entlüftungsvorrichtung nach Figur 1.

Die dargestellte Be- und Entlüftungsvorrichtung für ein Achsgehäuse runden Querschnitts eines Kraftfahrzeugs weist ein Filtergehäuse 1 auf, das aus einem topfartigen ersten Gehäuseteil 2 und einem topfartigen zweiten Gehäuseteil 3 besteht. Die zylindrische Außenkontur des ersten Gehäuseteils 2 entspricht mit gering größerem Durchmesser der Innenkontur des zweiten Gehäuseteils 3.

Mit ihren Topföffnungen einander zugewandt ist das erste Gehäuseteil 2 in das zweite Gehäuseteil 3 einführbar, bis das zweite Gehäuseteil 3 mit seiner Stirnseite 4 an einem flanschartigen Anschlag 5 des ersten Gehäuseteils 2 zur Anlage kommt.

Anschließend an den Boden 6 des zweiten Gehäuseteils 3 weist dieses an seiner Innenwand 7 einen radial umlaufenden Ringansatz 8 auf, dessen Durchmesser dem Durchmesser der zylindrischen Außenkontur des ersten Gehäuseteils 2 entspricht und dieses bei in das zweite Gehäuseteil 3 vollständig eingeführter Position konzentrisch zum zweiten Gehäuse 3 positioniert.

Der Boden des ersten Gehäuseteils 2 besitzt in seinem radial äußeren Bereich eine Ringstufe 9, an der ein eine Durchgangsöffnung 14 aufweisender ringförmiger Rahmen 10 einer Filtereinheit 11 axial abgestützt ist.

Der Rahmen 10 besteht aus einem ringförmigen ersten Rahmenteil 12 und einem dazu koaxialen ringförmigen zweiten Rahmenteil 13.

Das zweite Rahmenteil 13 weist an seinem an der Ringstufe 9 anliegenden Ende einem dem Innendurchmesser des ersten Gehäuseteils 2 entsprechenden Außendurchmesser auf.

Das erste Rahmenteil 12 weist eine radial umlaufende, zur Seite des zweiten Rahmenteils 13 offene Ringnut 15 auf, in die ein Ringansatz 16 des zweiten Rahmenteils 13 hineinragt und mit seiner äußeren radial umlaufenden Mantelfläche 17 an der radial äußeren Nutenwand 18 der Ringnut 15 geführt ist.

Bei in die Ringnut 15 eingeführtem Ringansatz 16 verbleibt ein Ringraum 19 in der Ringnut 15, der am Mündungsbereich der Ringnut 15 über einen Ringschlitz 20 mit der Durchgangsöffnung 14 verbunden ist.

Eine gasdurchlässige aber flüssigkeitsundurchlässige Filtermembran 21 verschließt die Durchgangsöffnung 14 und ragt mit ihrem radial umlaufenden Randbereich 22 durch den Ringschlitz in den Ringraum 19, wobei der in den Ringraum 19 ragende Teil des Randbereichs 22 abgebogen ist und sich annähernd koaxial zur Längsachse 23 von Filtergehäuse 1 und Durchgangsöffnung 14 erstreckt. Bei der Montage der Filtereinheit 11 wurde der Ringraum 19 mit einem aushärtbaren Kleber gefüllt, dann der Randbereich 22 der die Durchgangsöffnung 14 verschließenden Filtermembran 21 in den Ringraum 19 eingeführt und die beiden Rahmenteile 12 und 13 zusammengesteckt. Durch den dann ausgehärteten Kleber im Ringraum 19 ist die Filtermembran 21 fest mit dem Rahmen 10 und auch die Rahmenteile 12 und 13 fest miteinander verbunden.

Zu beiden Seiten der Filtermembran 21 ist jeweils ein Drahtgitter 24 angeordnet, wobei beide Drahtgitter 24 mit ihrem radial umlaufenden Randbereich in den Ringschlitz 20 ragen und so mit dem Rahmen 10 verbunden sind. Durch die Drahtgitter 24 ist die Filtermembran 21 daran gehindert axial auszulenken.

Das erste Rahmenteil 12 weist einen sich koaxial zum zweiten Gehäuseteil 3 hin erstreckenden Rohransatz 27 auf, der mit seiner radial umlaufenden Mantelfläche an der Innenwand des ersten Gehäuseteils 2 geführt und mit seiner Stirnseite am Boden 6 abgestützt ist.

An der Mantelfläche des Rohransatzes 27 ist eine radial umlaufende Nut 28 ausgebildet, in die ein Dichtring 29 eingesetzt ist, der mit Vorspannung an der Innenwand des ersten Gehäuseteils 2 in Anlage ist.

Der Ringansatz 8 ist an drei um jeweils 90°versetzten Stellen durch Unterbrechungen 25 unterbrochen, wobei sich die Unterbrechungen 25 bis in den Boden 6 hinein und dort um eine Vertiefung 26 radial nach innen erstrecken.

Über die Vertiefungen 26, die Unterbrechungen 25, den Ringspalt 30 zwischen erstem Gehäuse 2 und zweitem Gehäuse 3 sowie der Stirnseite 4 und dem Anschlag 5 ist ein Notentlüftungskanal gebildet.

Das Filtergehäuse 1 ist in seiner Einbaulage am Kraftfahrzeug dargestellt. Dabei befindet sich die Filtermembran 21 mit ihrer Ebene in einer senkrechten Ausrichtung.

Der Innenraum des ersten Gehäuseteils 2 des Filtergehäuses 1 auf der linken Seite der Filtermembran 21 ist in seinem unteren Bereich mit einem ersten Anschlußstutzen 31 versehen, an den ein Schlauch 40 anschließbar ist, der zum Inneren eines nicht dargestellten Achsgehäuses führt.

Dem ersten Anschlußstutzen 31 koaxial gegenüberliegend in den Innenraum des zweiten Gehäuseteils 3 einmündend besitzt das zweite Gehäuseteil 3 einen zweiten Anschlußstutzen 32, der nach unten gerichtet ist und an den ein zweiter Schlauch 41 anschließbar ist, der mit seinem freien Ende in die Umgebung mündet.

Zum Zusammenbau der Be- und Entlüftungsvorrichtung wird zunächst die austauschbare Filtereinheit 11 in das erste Gehäuseteil 2 eingesetzt und dann das zweite Gehäuseteil 3 auf das erste Gehäuseteil 2 bis zur Anlage am Anschlag 5 aufgeschoben.

Auf jeder Seite des ersten Gehäuseteils 2 sind außen jeweils zwei parallel im Abstand zueinander sich axial erstreckende Rastarme 33 vorhanden, die mit ihrem einen Ende an dem anschlagseitigen Ende des ersten Gehäuseteils 2 befestigt sind und an ihren freien Enden einander zugewandte Rasten 34 aufweisen.

Das zweite Gehäuseteil 3 weist entsprechend den Paaren von Rastarmen 33 sich axial erstreckende Rastnocken 35 auf, an denen beim Zusammenfügen der Gehäuseteile 2 und 3 federnd voneinander weggespreizt entlanggleiten und beim Erreichen des Endes der Rastnocken 35 diese hintergreifen und so die Gehäuseteile 2 und 3 zusammen halten. Die freien Enden 36 der Rastarme 33 werden in der zusammengefügten Position der Gehäuseteile 2 und 3 in Ausnehmungen 37 am zweiten Gehäuseteil 3 eingeführt, die ein selbsttätiges Herausbewegen der Rastnocken 35 aus ihrer Hintergreifposition verhindern. Die Ausnehmungen 37 sind an einem radial flanschartig hervorstehenden Ansatz 38 des zweiten Gehäuseteils 3 ausgebildet.

Um die Filtereinheit 11 zwecks eines Austauschs leicht wieder aus dem ersten Gehäuseteil 2 des geöffneten Filtergehäuses 1 herausziehen zu können, ist an dem ersten Rahmenteil 12 ein von der Filtermembran weggerichtetes, axial hervorstehendes Griffteil 39 angeordnet.

### Bezugszeichen

- 1: Filtergehäuse
- 2: erstes Gehäuseteil
- 3: zweites Gehäuseteil
- 4: Stirnseite
- 5: Anschlag
- 6: Boden
- 7: Innenwand
- 8: Ringansatz
- 9: Ringstufe
- 10: Rahmen
- 11: Filtereinheit
- 12: erstes Rahmenteil
- 13: zweites Rahmenteil
- 14: Durchgangsöffnung
- 15: Ringnut
- 16: Ringansatz
- 17: Mantelfläche
- 18: äußere Nutenwand
- 19: Ringraum
- 20: Ringschlitz
- 21: Filtermembran
- 22: Randbereich
- 23: Längsachse
- 24: Drahtgitter
- 25: Unterbrechungen
- 26: Vertiefung
- 27: Rohransatz
- 28: Nut
- 29: Dichtring
- 30: Ringspalt
- 31: erster Anschlussstutzen
- 32: zweiter Anschlussstutzen
- 33: Rastarme
- 34: Rasten
- 35: Rastnocken
- 36: freie Enden
- 37: Ausnehmungen
- 38: Ansatz
- 39: Griffteil
- 40: erster Schlauch
- 41: zweiter Schlauch

## Patentansprüche

1. Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht, mit einem in der Leitung angeordneten Filtergehäuse (1), das von einer gasdurchlässigen und flüssigkeitsundurchlässigen Filtermembran (21) unterteilt ist, wobei ein erster Teil der Leitung von dem Behälter zu der einen Seite der Filtermembran (21) und ein zweiter Teil der Leitung von der zweiten Seite der Filtermembran (21) zur Umgebung führt, **dadurch gekennzeichnet, dass** auf einer oder zu beiden Seiten der Filtermembran (21) eine eine Auslenkung der Filtermembran (21) quer zu ihrer Ebene begrenzende Stützeinrichtung angeordnet ist.

2. Be- und Entlüftungsvorrichtung nach Anspruch 1, **dadurch gekennzeichnet, dass** die Stützeinrichtungen Drahtgitter (24) sind.

3. Be- und Entlüftungsvorrichtung nach einem der vorhergehenden Ansprüche, **dadurch gekennzeichnet, dass** die Filtermembran (21) einen Filtereinsatz (11) bildend an einem in den Innenraum des Filtergehäuses (1) lösbar einsetzbaren Rahmen (10) angeordnet ist, dessen Querschnitt dem Querschnitt des Innenraums des Filtergehäuses (1) entspricht.

4. Be- und Entlüftungsvorrichtung nach Anspruch 3, **dadurch gekennzeichnet, dass** die Stützeinrichtungen an dem Rahmen (10) angeordnet sind.

5. Be- und Entlüftungsvorrichtung nach einem der Ansprüche 3 und 4, **dadurch gekennzeichnet, dass** der Innenraum des Filtergehäuses (1) und des Rahmens (10) einen runden Querschnitt aufweisen, wobei an der äußeren radial umlaufenden Mantelfläche des Rahmens (10) eine radial umlaufende Nut (28) ausgebildet ist, in die ein Dichtring (29) eingesetzt ist.

6. Be- und Entlüftungsvorrichtung nach einem der Ansprüche 3 bis 5, **dadurch gekennzeichnet, dass** der Rahmen (10) ein axial hervorstehendes Griffteil (39) aufweist.

7. Be- und Entlüftungsvorrichtung nach einem der vorhergehenden Ansprüche, **dadurch gekennzeichnet, dass** das Filtergehäuse (1) aus zwei topfartigen Gehäuseteilen (2, 3) besteht, die ihre Topföffnungen einander zugewandt miteinander verbindbar sind.

8. Be- und Entlüftungsvorrichtung nach Anspruch 7, **dadurch gekennzeichnet, dass** die Außenkontur des einen Gehäuseteils (3) der Innenkontur des anderen Gehäuseteils (2) entspricht und das erste Gehäuseteil (2) in den Innenraum des zweiten Gehäuseteils (3) einschiebbar ist und die beiden Gehäuseteile (2, 3) miteinander verbindbar sind.

9. Be- und Entlüftungsvorrichtung nach Anspruch 8, **dadurch gekennzeichnet, dass** die Filtereinheit (11) mit seinem Rahmen (10) zwischen den Böden (6) der beiden Gehäuseteile (2, 3) eingespannt ist.

10. Be- und Entlüftungsvorrichtung nach einem der Ansprüche 8 und 9, **dadurch gekennzeichnet, dass** die beiden Gehäuseteile (2, 3) mittels einer oder mehrerer Rasteinrichtungen miteinander verbindbar sind.

11. Be- und Entlüftungsvorrichtung nach einem der vorhergehenden Ansprüche, **dadurch gekennzeichnet, dass** das Filtergehäuse (1) mit annähernd senkrechter Ebene der Filtermembran (21) an dem Kraftfahrzeug anordenbar ist und der erste Teil und/oder der zweite Teil der Leitung in den unteren Bereich des Filtergehäuses (1) münden.

12. Be- und Entlüftungsvorrichtung nach einem der vorhergehenden Ansprüche, **dadurch gekennzeichnet, dass** das Filtergehäuse (1) einen ersten Anschlussstutzen (31) zum Anschließen eines zum Behälter führenden ersten Schlauchs (41) und/oder einen zweiten Anschlussstutzen (32) zum Anschließen eines in die Umwelt mündenden zweiten Schlauchs (41) aufweist.

13. Be- und Entlüftungsvorrichtung nach einem der Ansprüche 7 bis 11, **dadurch gekennzeichnet, dass** zumindest eines der Gehäuseteile (3) einen oder mehrere über seine radial umlaufende äußere Mantelfläche radial flanschartig hervorstehende Ansätze (38) aufweist.

14. Be- und Entlüftungsvorrichtung nach einem der vorhergehenden Ansprüche, **dadurch gekennzeichnet, dass** der mit der Umgebung verbundene Teil des Innenraums des Filtergehäuses (1) über einen Notentlüftungskanal mit der Umgebung verbunden ist, der am oberen Bereich des Filtergehäuses (1) in die Umgebung mündet.
